# EUROPÄISCHE PATENTSCHRIFT

(11) **EP 1 403 175 B1**
(45) Veröffentlichungstag und Bekanntmachung des Hinweises auf die Patenterteilung: **21.02.2007**
(21) Anmeldenummer: 03019156.3
(22) Anmeldetag: 25.08.2003
(51) Int. Cl.: B62D 25/16

(54) **Kotflügelaufbau an Kraftfahrzeugen**
Fender structure on motor vehicles
Structure d'une aile pour véhicules automobiles

(30) Priorität: 24.09.2002 DE 10244455
(43) Veröffentlichungstag der Anmeldung: 31.03.2004
(73) Patentinhaber: Volkswagen Aktiengesellschaft, 38436 Wolfsburg (DE)
(72) Erfinder: Lange, Sven, 38551 Ribbesbüttel (DE)

(56) Entgegenhaltungen:
- EP-A- 1 336 551
- DE-A- 10 009 364
- DE-A- 10 063 582
- DE-A- 19 950 294
- PATENT ABSTRACTS OF JAPAN vol. 2002, no. 03, 3. April 2002 (2002-04-03) -& JP 2001 310764 A (MAZDA MOTOR CORP), 6. November 2001 (2001-11-06)

## Beschreibung

Die Erfindung betrifft einen Kotflügelaufbau an Kraftfahrzeugen nach dem Oberbegriff des Patentanspruchs 1.

Aufgrund der seit langem bekannten Tatsache, dass bei einer Frontalkollision eines Fußgängers mit einem PKW der Fußgänger vornehmlich mit dem Oberkörper bzw. dem Kopf auf die Frontklappe und/oder angrenzende Karosserieteile, wie Kotflügel aufschlägt und daraus folgend sich beträchtliche Körperschäden zuziehen kann, hat die fahrzeugherstellende Industrie umfangreiche Anstrengungen unternommen, diesem Mißstand zu begegnen, um wenigstens die Körperschäden aus einem eventuellen Zusammenstoß zwischen Fußgänger und Kraftfahrzeug zu minimieren.

Grundsätzlich ist dabei die erforderliche Grundsteifigkeit des Kotflügelaufbaus in Einklang mit einem möglichst hohen Fußgängerschutz zu bringen, der sich insbesondere durch eine möglichst hohe "Weichheit" des oberen Kotflügelbereiches auszeichnet.

Danach ist es bekannt, die Oberkante des Kotflügels mittels sogenannter energieabsorbierenden Elemente abzustützen. Solche Elemente können beispielsweise durch seitlich offene U-Profile gebildet sein, die im Falle einer vertikalen Kraft geeignet sind zusammengepreßt zu werden, wodurch ein energieabsorbierender Deformationsweg geschaffen wird (DE 29 34 060 A1; JP 11321717 A).

Ebenso ist es bekannt, abstützende Deformationsglieder in Form von bauchig ausgeformten oder gebogenen Blechen vorzusehen, die ihrerseits im Falle einer vertikalen Kraft durch Nachgeben und nachfolgendes Abknicken bzw. Zusammenpressen den benötigten Deformationsweg freigeben (DE 29 34 060 A1; JP 11321717 A), wobei durch eine Vielzahl in Fahrzeuglängsrichtung angeordneter und voneinander beabstandeter sowie getrennt voneinander wirkender Deformationselemente, auch als Befestigungslappen bezeichnet, die "Weichheit" dieser Kotflügelbereiche einstellbar gestaltet werden kann (DE 30 47 969 A1; DE 199 59 606 A1).

All den vorgenannten Lösungen ist gemein, dass zwar eine gewisse "Weichheit" der oberen Kotflügelbereiche gegeben ist, jedoch die Steifigkeit des Kotflügels quer zur Fahrzeuglängsrichtung und in Richtung derselben lediglich durch die Materialwahl und Materialstärke des Kotflügels einstellbar ist, so dass hier sicherlich immer ein gewisser Kompromiß zwischen erforderlicher Steifigkeit des Kotflügels und gewünschter "Weichheit" desselben angezeigt ist.

Um diesem Problem zu begegnen, ist es aus der DE 199 48 732 A1 bekannt, den Kotflügel aus einem Blech mit unterschiedlichen Materialstärken, beispielsweise nach der "Tailored-Blank-Technik" hergestellt, auszubilden, wobei der untere Kotflügelbereich zur Erzielung der gewünschten hohen Steifigkeit eine größere Materialstärke und der obere Kotflügelbereich zur Schaffung einer bestimmten "Weichheit" eine geringere Materialstärke aufweisen. Der obere Kotflügelbereich ist ferner vertikal durch ein Deformationsglied aus energieabsorbierenden Schaum auf einem Längsträger abgestützt. Als besonders nachteilig wird bezüglich dieser Lösung der Herstellungsaufwand der "Tailored-Blank-Bleche" eingeschätzt.

Demgegenüber ist mit der DE 100 09 364 A1 eine Kotflügelanordnung offenbart worden, die ihrerseits das oben erwähnte Deformationselement mit C-förmigen Profilquerschnitt vorsieht, wobei zur Erzielung einer erhöhten Steifigkeit des Kotflügels quer zur Fahrzeuglängsrichtung und in Richtung derselben, dem Deformationselement quer zur Fahrzeuglängsrichtung eine Mehrzahl sogenannter streifenförmiger Abstützteile zugeordnet sind, die sowohl mit der Innenkontur des Kotflügels als auch mit dem unteren Schenkel des Deformationselementes fest verbunden sind. Ferner wird vorgeschlagen, dass sich das Abstützteil in Fahrzeuglängsrichtung gesehen über die gesamte Länge des Deformationselementes erstreckt. Sicherlich kann durch diese Maßnahme sowohl eine gewisse "Weichheit" des Kotflügels durch eine Verringerung der Materialstärke als auch die erforderliche Steifigkeit desselben eingestellt werden, jedoch ist durch die Mehrteiligkeit von Deformationselement und Abstützteil ein erhöhter Fertigungs- sowie Montageaufwand zu verzeichnen, der seinerseits mit erhöhten Kosten einhergeht. Des Weiteren ist als nachteilig einzuschätzen, dass durch den C-förmigen Profilquerschnitt des Deformationselementes, dasselbe zum sogenannten federnden "Aufspringen" neigt, welches einer an sich gewünschten exakten Trennfuge zwischen der Oberkante des Kotflügels und der korrespondierenden Kante der Frontklappe entgegensteht.

Schließlich ist aus der JP(A)20013100764 ein Kotflügelaufbau mit einer sich in Fahrzeuglängsrichtung sich erstreckenden, im Wesentlichen der Innenkontur des Kotflügels folgenden Kotflügelbank bekannt, welche zum einen an der Innenkontur des Kotflügels und zum anderen an dem tragenden Bauteil der Fahrzeugkarosserie festgelegt ist. Die Kotflügelbank ist durch ein weitestgehend im Querschnitt geschlossenes Hohlprofil mit fensterförmigen Aussparungen und Stegen, die ihrerseits als Deformationselement dienen und vom tragenden Bauteil ausgehend nach oben gegen die Oberkante des Kotflügels gerichtet und mit diesem verbunden sind, gebildet.

Aufgabe der Erfindung ist es nunmehr einen verbesserten Kotflügelaufbau zu schaffen, der einfach und kostengünstig und insbesondere quer zur Längsachse des Kraftfahrzeugs und in Richtung derselben steif ausgebildet ist sowie im Falle einer vertikalen Kraftkomponente infolge eines Zusammenstoßes mit einem Fußgänger und Aufschlagen desselben auf dem oberen Bereich des Kotflügels eine für den betroffenen Fußgänger möglichst schonende Energieabsorption zuläßt.

Überdies ist es Aufgabe der Erfindung, eine exakte Trennfuge zwischen der Oberkante des Kotflügels und der korrespondierenden Kante der Frontklappe zu gewährleisten.

Ausgehend von einem Kotflügelaufbau an Kraftfahrzeugen, beinhaltend einen vorderen Kotflügel und wenigstens ein Deformationselement mit welchem die Oberkante des Kotflügels im Wesentlichen vertikal gegen ein tragendes Bauteil der Fahrzeugkarosserie abgestützt ist, wobei dem Kotflügel eine in Fahrzeuglängsrichtung sich erstreckende, im Wesentlichen der Innenkontur des Kotflügels folgendeKotflügelbank fest zugeordnet ist, die zum einen an der Innenkontur des Kotflügels und zum anderen an dem tragenden Bauteil der Fahrzeugkarosserie festgelegt ist und wobei die Kotflügelbank wenigstens ein Deformationselement aufweist, welches einstückig mit der Kotflügelbank verbunden und vom tragenden Bauteil ausgehend nach oben gegen die Oberkante des Kotflügels gerichtet und mit dieser fest verbunden ist, wird die Aufgabe nunmehr dadurch gelöst, dass die Kotflügelbank durch ein umgeformtes Flächenelement gebildet und das wenigstens eine Deformationselement aus der Struktur der Kotflügelbank herausgeformt ist.

In einer vorteilhaften Ausgestaltung weisen die Kotflügelbank und/oder das wenigstens eine Deformationselement Aussparungen, Ausschnitte und/oder Versteifungselemente auf. Des Weiteren wird als erfindungsgemäß angesehen, dass das wenigstens eine Deformationselement mit einer oder mehreren Sollknickstellen versehen ist

Zweckmäßigerweise ist die Kotflügelbank samt dem wenigstens einen Deformationselement als ein Umformteil aus Metallblech oder Kunststoff ausgebildet.

Fernerhin wird vorgeschlagen, dass die Kotflügelbank horizontal oder in einem bestimmten Winkel "α" ansteigend oder abfallend vom tragenden Bauteil der Fahrzeugkarosserie ausgehend gegen die Innenkontur des Kotflügels geführt ist.

Weiterhin wird im Sinne der Erfindung vorgeschlagen, dass die Kotflügelbank zur Befestigung am tragenden Bauteil der Fahrzeugkarosserie und an der Innenkontur des Kotflügels jeweils einen oder mehrere Befestigungsstege aufweist, wobei die Befestigungsstege nahezu parallel zum tragenden Bauteil respektive zur Innenkontur des Kotflügels gerichtet sind. Die Kotflügelbank kann dabei über den/die Befestigungssteg/e am tragenden Bauteil durch Schweißung, Klebung oder mittels mechanischer Befestigungsmittel festgelegt sein. Wie die Erfindung noch vorsieht, ist die Kotflügelbank über den/die Befestigungssteg/e an der Innenkontur des Kotflügels durch Klebung festgelegt.

Schließlich ist erfindungsgemäß die Anzahl der Deformationselemente und deren in Fahrzeuglängsrichtung reichende Erstreckung, die Ausbildung derselben mit Versteifungssicken, Versteifungsstegen und/oder Sollknickstellen, die Ausbildung der Kotflügelbank mit Aussparungen, Ausschnitten, Versteifungssicken und/oder Versteifungsstegen sowie der Winkel "α", unter dem die Kotflügelbank vom tragenden Bauteil der Fahrzeugkarosserie ausgehend gegen die Innenkontur des Kotflügels geführt ist, in Abhängigkeit von einer gewünschten Abstützung des Kotflügels respektive dessen Steifigkeit quer zur Fahrzeuglängsrichtung und in Richtung derselben und einer gewünschten Verzögerung eines mit einer bestimmten vertikalen Aufschlagkraft auf den Kotflügel aufschlagenden Körpers definiert gewählt.

Die Erfindung wird nachstehend anhand eines in den Zeichnungen schematisch dargestellten Ausführungsbeispieles näher erläutert. Es zeigen:
- Figur 1: die perspektivische Ansicht der erfindungsgemäßen Kotflügelbank des Kotflügelaufbaus eines Kraftfahrzeugs,
- Figur 2: die Ansicht "A" nach Fig. 1,
- Figur 3: den Schnitt "B-B" der Kotflügelbank nach Fig. 1 im Zusammenbau mit einem tragenden Bauteil und einem Kotflügel,
- Figur 4: den Schnitt "C-C" der Kotflügelbank nach Fig. 1 im Zusammenbau gem. Fig. 3.

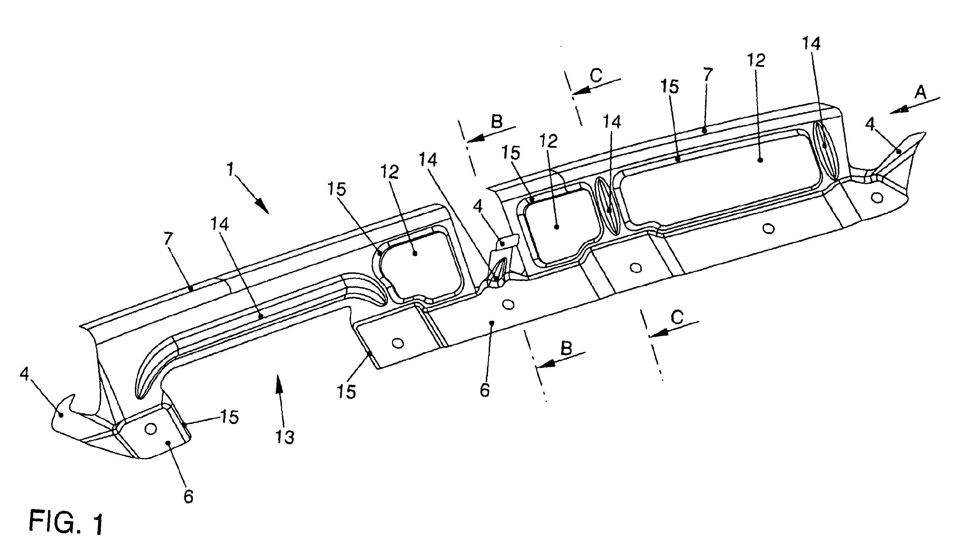

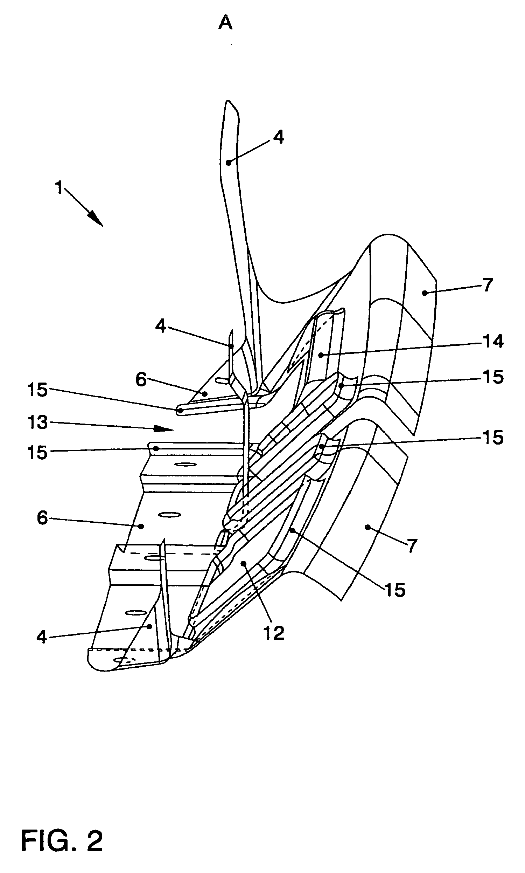

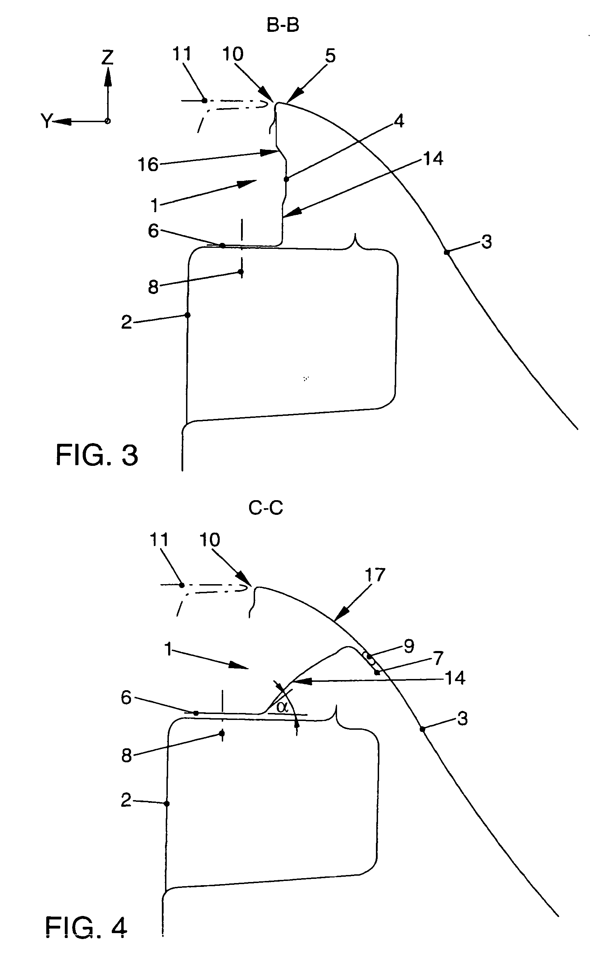

Die Fig. 1 und 2 zeigen in perspektivischer Ansicht ein umgeformtes Flächenelement in Form einer sogenannten Kotflügelbank 1, die ihrerseits gem. den Fig. 3 und 4 sowohl mit einem tragenden Bauteil 2 der Fahrzeugkarosserie, vorliegend einem Längsträger, als auch mit einem Kotflügel 3, welcher als Metallblech- oder Kunststoffumformteil ausgebildet sein kann, fest verbunden ist.

Die Kotflügelbank 1 erstreckt sich im Wesentlichen in Fahrzeuglängsrichtung und folgt dabei der Innenkontur des Kotflügels 3.

Ferner verfügt die Kotflügelbank 1 über wenigstens ein, vorliegend drei Deformationselemente 4, welche einstückig mit der Kotflügelbank 1 verbunden sind und vom tragenden Bauteil 2 ausgehend nach oben gegen die Oberkante 5 des Kotflügels 3 gerichtet und mit dieser fest verbunden, insbesondere verklebt oder verschweißt sind (Fig. 3).

Erfindungsgemäß sind die Deformationselemente 4 aus der Struktur der Kotflügelbank 1 mittels beispielsweise einer Umformpresse herausgeformt, wobei Ausgangsplatinen für die Kotflügelbank 1 sowohl aus Metallblech als auch aus Kunststoff Verwendung finden können. Durch diese Maßnahme sind insbesondere Material- und Kostenersparnisse zu verzeichnen.

Fernerhin weist die Kotflügelbank 1 zur Befestigung derselben am tragenden Bauteil 2 der Fahrzeugkarosserie und an der Innenkontur des Kotflügels 3 jeweils einen oder mehrere Befestigungsstege 6; 7 auf, wobei dieselben nahezu parallel zum tragenden Bauteil 2 respektive zur Innenkontur des Kotflügels 3 gerichtet sind (Fig. 3 und 4).

Wie in den Fig. 3 und 4 weiter gezeigt, ist die Kotflügelbank 1 über die Befestigungsstege 6 mittels mechanischer Befestigungsmittel 8, welche beispielsweise nicht näher dargestellte Schraub- oder auch Nietverbindungen sein können, am tragenden Bauteil 2 festgelegt. Ebenso ist es denkbar und wird durch die Erfindung mit erfaßt, die Kotflügelbank 1 am tragenden Bauteil 2 durch Schweißung oder Klebung festzulegen.

Die Festlegung der Kotflügelbank 1 mittels der Befestigungsstege 7 am Kotflügel 3 ist vorzugsweise durch Klebung zu realisieren. Hierdurch werden insbesondere bei Verwendung geringer Blechdicken für den Kotflügel 3 und in Grenzen elastischer Klebeverbindungen 9 Abzeichnungen auf der Außenhaut des Kotflügels 3 vermieden.

Durch sämtliche vorstehenden Maßnahmen wird im Wesentlichen ein quer zur Längsachse des Kraftfahrzeugs und in Richtung derselben steifer Kotflügelaufbau geschaffen. Weiterhin ist infolge der Abstützung der Oberkante 5 des Kotflügels 3 mittels der Deformationselemente 4 die Einhaltung einer exakten Trennfuge 10 zwischen der Oberkante 5 des Kotflügels 3 und der korrespondierenden Kante der Frontklappe 11 auch bei geringen Materialstärken des Kotflügels 3 gewährleistet.

Zur Erzielung bestimmter Steifigkeiten des Kotflügelaufbaus kann die Kotflügelbank 1 beliebig ausgebildete Aussparungen 12, Ausschnitte 13 und/oder Versteifungselemente aufweisen. Vorliegend ist die Kotflügelbank 1 mit fensterähnlichen Aussparungen 12 sowie seitlichen Ausschnitten 13, ferner mit Versteifungselementen in Form von Versteifungssicken 14 und Versteifungsstegen 15 versehen.

Um der Aufgabe einer möglichst schonenden Energieabsorption im Falle einer vertikalen Kraftkomponente infolge eines Zusammenstoßes mit einem Fußgänger und Aufschlagen desselben auf dem oberen Bereich des Kotflügels 3 gerecht zu werden, können die Deformationselemente 4 über eine oder mehrere, vorliegend über eine Sollknickstelle 16, die ihrerseits nach Art einer Kurbel ausgebildet ist, verfügen.

Des Weiteren kann es auch hier angezeigt sein, nach Bedarf Versteifungselemente in Form von Versteifungssicken 14 und/oder Versteifungsstegen 15 sowie fensterähnliche Aussparungen 12 und/oder Ausschnitte 13 vorzusehen. Im vorliegenden Ausführungsbeispiel beschränkt sich die zusätzliche Versteifung jedoch auf eine Versteifungssicke 14, die unterhalb der Sollknickstelle 16 angeordnet ist (Fig. 3).

Wie insbesondere der Fig. 4 zu entnehmen, ist die Kotflügelbank 1 in einem bestimmten Winkel "α" ansteigend vom tragenden Bauteil 2 der Fahrzeugkarosserie gegen die Innenkontur des Kotflügels 3 geführt, woraus ein bestimmter auskragender Flächenabschnitt 17 des Kotflügels 3 resultiert. Gleichermaßen besteht die Möglichkeit, die Kotflügelbank 1 horizontal oder in einem bestimmten Winkel "α" abfallend vom tragenden Bauteil 2 der Fahrzeugkarosserie ausgehend gegen die Innenkontur des Kotflügels 3 zu führen (nicht näher dargestellt). Aus Vorstehendem resultiert somit ein in Grenzen beliebig einstellbarer Hebelarm, der, für einen Fachmann sicherlich leicht nachvollziehbar, auf die "Weichheit" des Kotflügels 3 respektive die Verzögerung eines auf denselben aufschlagenden Körperteils eines Fußgängers, erheblichen Einfluß hat.

In umfangreichen Versuchen wurde nämlich gefunden, dass gerade durch die Wahl der Anzahl der Deformationselemente 4 und deren in Fahrzeuglängsrichtung reichende Erstreckung, die Ausbildung derselben mit Versteifungssicken 14, Versteifungsstegen 15 und/oder Sollknickstellen 16, die Ausbildung der Kotflügelbank 1 mit fensterähnlichen Aussparungen 12, Ausschnitten 13, Versteifungssicken 14 und/oder Versteifungsstegen 15 sowie die Wahl des Winkels "α", unter dem die Kotflügelbank 1 vom tragenden Bauteil 2 der Fahrzeugkarosserie ausgehend gegen die Innenkontur des Kotflügels 3 geführt ist, die Abstützung des Kotflügels 3 respektive dessen Steifigkeit quer zur Fahrzeuglängsrichtung und in Richtung derselben und die Verzögerung eines mit einer bestimmten vertikalen Aufschlagkraft auf den Kotflügel 3 aufschlagenden Körpers definiert einstellbar ist.

Die Funktionsweise der Erfindung bezüglich des Fußgängerschutzes ergibt sich im Wesentlichen wie folgt:

Gesetzt den Fall, ein Fußgänger kollidiert frontal mit einem Kraftfahrzeug, welches einen erfindungsgemäß ausgebildeten Kotflügelaufbau umfaßt, so schlägt dieser mit dem Oberkörper und/oder dem Kopf auf den Kotflügel 3 auf. Sobald eine ausreichende vertikale Kraft auf den Kotflügel 3 einwirkt, knickt der betreffende auskragende Flächenabschnitt 17 des Kotflügels 3 unter Energieabsorption nach innen und in der Folge verformt sich wenigstens ein Deformationselement 4 unter weiterer Energieabsorption dauerhaft. Ist das Deformationselement mit einer Sollknickstelle 16 versehen, knickt dieses anfangs definiert innerhalb derselben und bei weiterer erhöhter Krafteinleitung im Bereich der darunter liegenden Versteifung ab.

Zusammenfassend ist festzustellen, dass in maßgeblicher Verbesserung des Standes der Technik ein Kotflügelaufbau geschaffen wurde, der durch eine einzige, nämlich einstückig ausgebildete Vorrichtung in Form einer Kotflügelbank 1 mit Deformationselementen 4 die gestellte Aufgabe kostengünstig und mit einfachen Mitteln löst.

## Patentansprüche

1. Kotflügelaufbau an Kraftfahrzeugen, beinhaltend einen vorderen Kotflügel (3) und wenigstens ein Deformationselement (4) mit welchem die Oberkante des Kotflügels (3) im Wesentlichen vertikal gegen ein tragendes Bauteil (2) der Fahrzeugkarosserie abgestützt ist, wobei dem Kotflügel (3) eine in Fahrzeuglängsrichtung sich erstreckende, im Wesentlichen der Innenkontur des Kotflügels (3) folgende Kotflügelbank (1) fest zugeordnet ist, die zum einen an der Innenkontur des Kotflügels (3) und zum anderen an dem tragenden Bauteil (2) der Fahrzeugkarosserie festgelegt ist und wobei die Kotflügelbank (1) wenigstens ein Deformationselement (4) aufweist, welches einstückig mit der Kotflügelbank (1) verbunden und vom tragenden Bauteil (2) ausgehend nach oben gegen die Oberkante (5) des Kotflügels (3) gerichtet und mit dieser fest verbunden ist,
**dadurch gekennzeichnet, dass**
die Kotflügelbank (1) durch ein umgeformtes Flächenelement gebildet und das wenigstens eine Deformationselement (4) aus der Struktur der Kotflügelbank (1) herausgeformt ist.

2. Kotflügelaufbau nach Anspruch 1,
**dadurch gekennzeichnet, dass**
die Kotflügelbank (1) und/oder das wenigstens eine Deformationselement (4) Aussparungen (12), Ausschnitte (13) und/oder Versteifungselemente aufweisen.

3. Kotflügelaufbau nach einem der Ansprüche 1 und 2,
**dadurch gekennzeichnet, dass**
das wenigstens eine Deformationselement (4) mit einer oder mehreren Sollknickstellen (16) versehen ist.

4. Kotflügelaufbau nach einem der Ansprüche 1 bis 3,
**dadurch gekennzeichnet, dass**
die Kotflügelbank (1) samt dem wenigstens einen Deformationselement (4) als ein Umformteil aus Metallblech oder Kunststoff ausgebildet.

5. Kotflügelaufbau nach einem der Ansprüche 1 bis 4,
**dadurch gekennzeichnet, dass**
die Kotflügelbank (1) horizontal oder in einem bestimmten Winkel "α" ansteigend oder abfallend vom tragenden Bauteil (2) der Fahrzeugkarosserie ausgehend gegen die Innenkontur des Kotflügels (3) geführt ist.

6. Kotflügelaufbau nach einem der Ansprüche 1 bis 5,
**dadurch gekennzeichnet, dass**
die Kotflügelbank (1) zur Befestigung am tragenden Bauteil (2) der Fahrzeugkarosserie und an der Innenkontur des Kotflügels (3) jeweils einen oder mehrere Befestigungsstege (6; 7) aufweist, wobei die Befestigungsstege (6; 7) nahezu parallel zum tragenden Bauteil (2) respektive zur Innenkontur des Kotflügels (3) gerichtet sind.

7. Kotflügelaufbau nach Anspruch 6,
**dadurch gekennzeichnet, dass**
die Kotflügelbank (1) über den/die Befestigungssteg/e (6; 7) am tragenden Bauteil (2) durch Schweißung, Klebung oder mittels mechanischer Befestigungsmittel (8) festgelegt ist.

8. Kotflügelaufbau nach Anspruch 7,
**dadurch gekennzeichnet, dass**
die Kotflügelbank (1) über den/die Befestigungssteg/e (6; 7) an der Innenkontur des Kotflügels (3) durch Klebung festgelegt ist.

9. Kotflügelaufbau nach einem der Ansprüche 1 bis 8,
**dadurch gekennzeichnet, dass**
die Anzahl der Deformationselemente (4) und deren in Fshrzeugiängsrichtung reichende Erstreckung, die Ausbildung derselben mit Versteifungssicken (14), Versteifungsstegen (15) und/oder Sollknickstellen (16), die Ausbildung der Kotflügelbank (1) mit Aussparungen (12), Ausschnitten (13), Versteifungssicken (14) und/oder Versteifungsstegen (15) sowie der Winkel "α", unter dem die Kotflügelbank (1) vom tragenden Bauteil (2) der Fahrzeugkarosserie ausgehend gegen die Innenkontur des Kotflügels (3) geführt ist, in Abhängigkeit von einer gewünschten Abstützung des Kotflügels (3) respektive dessen Steifigkeit quer zur Fahrzeuglängsrichtung und in Richtung derselben und einer gewünschten Verzögerung eines mit einer bestimmten vertikalen Aufschlagkraft auf den Kotflügel (3) aufschlagenden Körpers definiert gewählt ist.

## Claims

1. Wing structure on motor vehicles, comprising a front wing (3) and at least one deformation element (4) by means of which the upper edge of the wing (3) is supported substantially vertically against a bearing structural part (2) of the vehicle body, the wing (3) being firmly assigned a wing support (1) which extends in the longitudinal direction of the vehicle and substantially follows the inner contour of the wing (3) and which, on the one hand, is fixed to the inner contour of the wing (3) and, on the other hand, is fixed to the bearing structural part (2) of the vehicle body, and the wing support (1) having at least one deformation element (4) which is connected in one piece with the wing support (1) and, starting from the bearing structural part (2), is directed upwardly towards the upper edge (5) of the wing (3) and is firmly connected thereto, **characterized in that** the wing support (1) is formed by a shaped sheetlike element and **in that** the at least one deformation element (4) is shaped from the structure of the wing support (1).

2. Wing structure according to Claim 1, **characterized in that** the wing support (1) and/or the at least one deformation element (4) have/has apertures (12), cutouts (13) and/or reinforcing elements.

3. Wing structure according to either of Claims 1 and 2, **characterized in that** the at least one deformation element (4) is provided with one or more predetermined bending points (16).

4. Wing structure according to one of Claims 1 to 3, **characterized in that** the wing support (1), together with the at least one deformation element (4), is designed as a shaped part made of metal sheet or plastic.

5. Wing structure according to one of Claims 1 to 4, **characterized in that**, starting from the bearing structural part (2) of the vehicle body, the wing support (1) is guided towards the inner contour of the wing (3) horizontally or ascending or descending at a certain angle "α".

6. Wing structure according to one of Claims 1 to 5, **characterized in that** the wing support (1) has one or more respective fastening webs (6; 7) for fastening it to the bearing structural part (2) of the vehicle body and to the inner contour of the wing (3), the fastening webs (6; 7) being directed virtually parallel to the bearing structural part (2) and to the inner contour of the wing (3) respectively.

7. Wing structure according to Claim 6, **characterized in that** the wing support (1) is fixed by way of the fastening web or webs (6; 7) to the bearing structural part (2) by means of welding, adhesive bonding or using mechanical fastening means (8).

8. Wing structure according to Claim 7, **characterized in that** the wing support (1) is fixed by way of the fastening web or webs (6; 7) to the inner contour of the wing (3) by means of adhesive bonding.

9. Wing structure according to one of Claims 1 to 8, **characterized in that** the number of deformation elements (4) and the extent to which they reach in the longitudinal direction of the vehicle, the formation thereof with reinforcing beads (14), reinforcing webs (15) and/or predetermined bending points (16), the formation of the wing support (1) with apertures (12), cutouts (13), reinforcing beads (14) and/or reinforcing webs (15) and also the angle "α" at which the wing support (1) is guided towards the inner contour of the wing (3) starting from the bearing structural part (2) of the vehicle body, are selected in a defined manner as a function of the desired degree of support of the wing (3), or of its rigidity, transversely to the longitudinal direction of the vehicle and in the direction thereof and on the desired deceleration of a body striking the wing (3) with a certain vertical impact force.

## Revendications

1. Structure d'aile de véhicules automobiles, contenant une aile avant (3) et au moins un élément de déformation (4) avec lequel le bord supérieur de l'aile (3) est supporté essentiellement verticalement contre un composant porteur (2) de la carrosserie du véhicule, un banc d'aile (1) s'étendant dans la direction longitudinale du véhicule, suivant essentiellement le contour interne de l'aile (3), étant associé fixement à l'aile (3), et étant fixé d'une part au contour interne de l'aile (3) et d'autre part au composant porteur (2) de la carrosserie du véhicule et le banc d'aile (1) présentant au moins un élément de déformation (4) qui est connecté d'une seule pièce au banc d'aile (1) et qui, partant du composant porteur (2), est orienté vers le haut vers le bord supérieur (5) de l'aile (3) et est connecté fixement à celui-ci,
**caractérisée en ce que**
le banc d'aile (1) est formé par un élément plan mis en forme et **en ce qu'**au moins un élément de déformation (4) est formé à partir de la structure du banc d'aile (1).

2. Structure d'aile selon la revendication 1,
**caractérisée en ce que**
le banc d'aile (1) et/ou l'au moins un élément de déformation (4) présentent des évidements (12), des découpes (13) et/ou des éléments de renforcement.

3. Structure d'aile selon l'une quelconque des revendications 1 et 2,
**caractérisée en ce que**
l'au moins un élément de déformation (4) est pourvu d'un ou de plusieurs points destinés à la flexion (16).

4. Structure d'aile selon l'une quelconque des revendications 1 à 3,
**caractérisée en ce que**
le banc d'aile (1) ainsi que l'au moins un élément de déformation (4) est réalisé sous forme d'une partie déformable en tôle métallique ou en plastique.

5. Structure d'aile selon l'une quelconque des revendications 1 à 4,
**caractérisée en ce que**
le banc d'aile (1) est guidé horizontalement ou suivant un certain angle "α" montant ou descendant à partir de l'élément porteur (2) de la carrosserie du véhicule vers le contour interne de l'aile (3).

6. Structure d'aile selon l'une quelconque des revendications 1 à 5,
**caractérisée en ce que**
le banc d'aile (1) présente, pour la fixation sur le composant porteur (2) de la carrosserie du véhicule et sur le contour interne de l'aile (3) à chaque fois une ou plusieurs âmes de fixation (6 ; 7), les âmes de fixation (6 ; 7) étant orientées pratiquement parallèlement au composant porteur (2), respectivement au contour interne de l'aile (3).

7. Structure d'aile selon la revendication 6,
**caractérisée en ce que**
le banc d'aile (1) est fixé sur le composant porteur (2) par le biais de la ou des âmes de fixation (6 ; 7) par soudage, collage ou par l'intermédiaire de moyens de fixation mécaniques (8).

8. Structure d'aile selon la revendication 7,
**caractérisée en ce que**
le banc d'aile (1) est fixé par le biais de la ou des âmes de fixation (6 ; 7) au contour interne de l'aile (3) par collage.

9. Structure d'aile selon l'une quelconque des revendications 1 à 8,
**caractérisée en ce que**
le nombre des éléments de déformation (4) et leur étendue dans la direction longitudinale du véhicule, leur conception avec des moulures de renforcement (14), des nervures de renforcement (15) et/ou des points destinés à la flexion (16), la conception du banc d'aile (1) avec des évidements (12), des découpes (13), des moulures de renforcement (14) et/ou des nervures de renforcement (15) ainsi que l'angle "α" suivant lequel le banc d'aile (1) est guidé à partir du composant porteur (2) de la carrosserie du véhicule vers le contour interne de l'aile (3), sont choisis de manière définie en fonction d'un support souhaité de l'aile (3) respectivement de sa rigidité transversalement à la direction longitudinale du véhicule et dans la direction de celui-ci et d'un ralentissement souhaité d'un corps venant frapper avec une force de frappe verticale définie contre l'aile (3).
